# EUROPÄISCHE PATENTSCHRIFT

(11) **EP 2 377 691 B1**
(45) Veröffentlichungstag und Bekanntmachung des Hinweises auf die Patenterteilung: **07.10.2015**
(21) Anmeldenummer: 11003056.6
(22) Anmeldetag: 12.04.2011
(51) Int. Cl.: B60B 33/02, B60T 1/00, B60T 1/06, B62B 5/04, F16D 51/10, F16D 63/00, F16D 65/14

(54) **Feststellbremse für eine mobile Arbeitsmaschine**
Parking brake for a mobile work machine
Frein de stationnement pour une machine de travail mobile

(30) Priorität: 13.04.2010 DE 102010014862
(43) Veröffentlichungstag der Anmeldung: 19.10.2011
(73) Patentinhaber: Ehrle Reinigungstechnik GmbH, 89257 Illertissen (DE)
(72) Erfinder: Entesperger, Georg, 87736 Böhen (DE); Sauter, Roland, 88319 Aitrach (DE)
(74) Vertreter: Meyer, Thorsten

(56) Entgegenhaltungen:
- DE-A1- 19 546 224
- DE-A1-102007 053 444
- DE-U1-202010 004 954
- US-A1- 2006 266 593
- US-B1- 6 360 851

## Beschreibung

Die Erfindung betrifft eine in einer Radnabe untergebrachte Feststellbremse gemäß dem Oberbegriff des Anspruchs 1.

Zur Sicherung beispielsweise eines Kinderwagens gegen Wegrollen ist eine Feststellbremse bekannt, welche eine unverdrehbar auf einer drehbaren Radwelle angeordnete Außenverzahnung vorsieht. Wenigstens ein Rad ist beispielsweise durch eine Steckverbindung ebenfalls unverdrehbar mit der Radwelle verbunden. Die Radwelle ist drehbar in einem Chassis des Kinderwagens gelagert. In einer Feststellposition der Feststellbremse greift ein Profil einer fest am Chassis angeordneten Betätigungsschwinge in die Außenverzahnung ein. In einer Fahrposition ist der Eingriff aufgehoben.

Nachteilig hieran ist die hohe Verschmutzungsgefahr, welcher die Außenverzahnung ausgesetzt ist, einhergehend mit der Gefahr einer unwirksamen oder zumindest eingeschränkten Funktion der Feststellbremse in der Feststellposition. Ein weiterer Nachteil ergibt sich durch die Notwendigkeit einer im Chassis drehbar gelagerten Radwelle, mit der zumindest ein Rad, welches feststellbar sein soll, unverdrehbar verbunden sein muss. Ferner ist hieran die Gefahr eines ungewollten Betätigens der Feststellbremse nachteilig, bedingt durch die außen liegende, frei zugängliche Betätigungsschwinge, die beispielsweise durch unbeabsichtigtes Anstoßen mit dem Fuß gelöst oder in Eingriff gebracht werden kann.

Ebenso bekannt sind am Chassis angeordnete, auf die Lauffläche des Reifens eines Rads einwirkende Fahr- und Feststellbremsen. Diese weisen neben dem oben letztgenannten Nachteil einer unbeabsichtigten Betätigung der außenliegenden Teile der Feststellbremse den Nachteil einer vom Reifenluftdruck und/oder vom Abnutzungsgrad des Reifenprofils sowie von dessen Geometrie abhängigen Bremswirkung auf.

Aus der DE 90 01 251 U1 ist eine Laufrolle bekannt, deren Tragteil wenigstens ein Rad drehbar auf einer Radachse lagert, wobei innerhalb des Radumfangs eine Bremseinrichtung vorgesehen ist. Diese Bremseinrichtung weist an der Umfangsfläche eine Radbremsfläche auf mit der ein Bremsorgan in Form einer Schwinge wechselwirkt, die durch einen Steuernocken gegen die Radbremsfläche drückbar ist. Der Steuernocken ist dabei von einem außerhalb des Radumfangs gelegenen Betätigungshebel gesteuert.

Durch DE 295 11 501 U1 ist eine Feststellbremse bekannt, welche ohne außenliegende Teile auskommt. Die Feststellbremse ist für Räder vorgesehen, die an einer fest stehenden Radwelle drehbar gelagert sind. Die Feststellbremse eignet sich damit auch für Räder, welche eine Steckachse aufweisen. Die Feststellbremse verfügt über einen an einer Innenwand einer Radnabe wenigstens eines Rads vorgesehenen Profilkranz, der gleichartige Kranzprofile aufweist, die gleichmäßig über den gesamten Innenumfang der Radnabe verteilt sind und sich frei in den Innenraum der Radnabe erstrecken. Die Feststellbremse weist außerdem einen an der fest stehenden Radwelle verschiebbar gelagerten und von außen betätigbaren Arretierschieber auf, der dem Profilkranz zugeordnet ist. Der Arretierschieber hat mindestens ein über ein Kranzprofil des Profilkranzes greifendes oder mindestens in einen Raum zwischen zwei Kranzprofile eingreifendes Schieberprofil. Der Arretierschieber ist in Eingriffsposition des Schieberprofils mit dem Kranzprofil arretierbar. Zum Verschieben und Arretieren des Arretierschiebers sind ein Betätigungsknopf und ein Löseknopf vorgesehen. Beide Knöpfe sind in der Radnabe angeordnet und in einer Richtung parallel zur fest stehenden Radwelle und in einer Richtung senkrecht zur Verschieberrichtung des Arretierschiebers gegenläufig niederzudrücken. Dabei wird der eine Knopf beim Hineindrücken des anderen Knopfs herausgedrückt.

Nachteilig hieran ist die komplizierte und teure Mechanik zur Umsetzung von Verschiebung und Arretierung des Arretierschiebers durch Niederdrücken der Knöpfe. Darüber hinaus ist die komplizierte Mechanik anfällig gegen Verschmutzung, wodurch sie verklemmt und nicht mehr zuverlässig arbeitet.

Gleiches gilt für die US 6,360,851 B1, die ein gebremstes Rad zeigt, bei dem ein Schieber einen linear verschieblichen Arretierstift in ein Zahnkranzprofil einschieben kann. Hierzu wird der Schieber über ein über eine eigene Achse betätigtes radial außerhalb des Rades angeordnetes Pedal gegen eine Federkraft betätigt.

Ebenso ist in der DE 195 46 224 A1 ein gebremstes Rad nach an sich gleichem Aufbau gezeigt, bei dem ebenso ein Schieber durch ein an einer separaten Achse gelagertes Pedal in eine sperrende Position und zurück verbracht werden kann. Auch in diesem Fall sind mehrere bewegte separate Teile notwendig, um die Funktion zu bewerkstelligen.

Der Erfindung liegt daher die Aufgabe zugrunde, eine verbesserte Feststellbremse zu entwickeln, welche einfach und kostengünstig hergestellt werden kann und die Nachteile des Standes der Technik behebt.

Diese Aufgabe wird gelöst mit den Merkmalen des Anspruchs 1.

Demnach ist eine Feststellbremse für ein an einer fest stehenden Radwelle drehbar gelagertes Rad vorgesehen. Die Feststellbremse verfügt über einen an einer Innenwand einer Radnabe wenigstens eines an der fest stehenden Radwelle drehbar gelagerten Rads vorgesehenen Profilkranz. Der Profilkranz weist gleichartige Kranzprofile auf, die gleichmäßig an der Innenwand über den gesamten Innenumfang der Radnabe verteilt sind und sich frei in den Innenraum der Radnabe erstrecken. Die Feststellbremse weist außerdem mindestens einen an der fest stehenden Radwelle in einer Richtung senkrecht zur Achse der Radwelle verschiebbar gelagerten und von außen betätigbaren Arretierschieber auf, der dem Profilkranz zugeordnet ist. Der Arretierschieber hat mindestens ein über ein Kranzprofil des Profilkranzes greifendes oder mindestens in einen Raum zwischen zwei Kranzprofilen eingreifendes Schieberprofil. Der Arretierschieber ist in einer Stellung, in der das Schieberprofil in das Kranzprofil eingreift arretierbar. Der Arretierschieber ist dabei zumindest so weit in Richtung senkrecht zur Achse der Radwelle verschiebbar, dass sich in einer ersten Endstellung des Verschiebewegs eine Eingriffstellung des Arretierschiebers der Feststellbremse ergibt, in welcher Eingriffstellung das Schieberprofil in das Kranzprofil eingreift, und dass sich in einer zweiten Endstellung des Verschiebewegs eine Freistellung des Arretierschiebers der Feststellbremse ergibt, welche frei von einem Eingriff des Schieberprofils in das Kranzprofil ist, bzw. in welcher Freistellung der Eingriff aufgehoben ist. Die Eingriffstellung des Arretierschiebers kennzeichnet dabei die Feststellposition der Feststellbremse, wohingegen die Freistellung die Fahrposition der Feststellbremse kennzeichnet.

Die Feststellbremse verfügt erfindungsgemäß über ein mit dem mindestens einen Arretierschieber zusammenwirkendes, um die Achse der fest stehenden Radwelle drehbar gelagertes Betätigungselement, welches in wenigstens einer ersten Richtung senkrecht zu der Achse von dieser aus gesehen eine erste Ausdehnung aufweist, und in wenigstens einer zweiten Richtung senkrecht zu der Achse, welche verschieden von der ersten Richtung ist, von der Achse aus gesehen eine zweite Ausdehnung aufweist, die von der ersten Ausdehnung verschieden, beispielsweise größer ist. Bei einem Wechsel der Ausrichtung des Betätigungselements gegenüber dem mindestens einen Arretierschieber von der ersten in die zweite Richtung erfolgt ein Betätigen bzw. Lösen der Feststellbremse. Der Unterschied zwischen den beiden Ausdehnungen des Betätigungselements in der ersten bzw. in der zweiten Richtung entspricht vorzugsweise wenigstens dem Verschiebeweg des mindestens einen Arretierschiebers von der Freistellung in die Eingriffstellung. Der Arretierschieber ist in Richtung radial zur Achse der Radwelle federbelastet. Besonders bevorzugt wirkt die Federbelastung in einer den Arretierschieber von der Eingriff- in die Freistellung verschiebenden Richtung radial zur Achse der Radwelle.

Als Profile des Profilkranzes können beliebige konkave bzw. konvexe Profile im Wechsel vorgesehen sein. Beispielsweise können die Profile Zähne einer als Profilkranz dienenden Innenverzahnung ausgebildet sein.

Vorteile der Erfindung gegenüber dem Stand der Technik ergeben sich unter anderem dadurch, dass die Feststellbremse einfache und kostengünstig herzustellende Mittel aufweist, mit denen der mindestens eine Arretierschieber von der Freistellung in die Eingriffstellung und umgekehrt verschoben werden kann. Darüber hinaus kommt die Feststellbremse ohne außerhalb der Radnabe montierte Teile aus. Dadurch ist die Feststellbremse vor unbeabsichtigtem Betätigen geschützt. Darüber hinaus geht von einer solchen Feststellbremse beim Umgang mit einem Gerät, an dem die Feststellbremse zum Einsatz kommt, keine Verletzungsgefahr, beispielsweise durch Hängenbleiben oder Darüberstolpern aus. Die Verwendung eines gegenüber der fest stehenden Radwelle um die Achse der Radwelle drehbar angeordneten Betätigungselements erlaubt die Betätigung der Feststellbremse durch eine einfache Drehbewegung von der Radnabe aus. Die vollständig in der Radnabe untergebrachte Feststellbremse kann in der Radnabe verkapselt sein. Beispielsweise kann eine Radnabenabdeckung bzw. ein Radnabendeckel vorgesehen sein, welche bzw. welcher die Radnabe vollständig abdecken und gegenüber der Radnabe verdrehbar angeordnet sein kann. Die Radnabenabdeckung kann zum Verdrehen des Betätigungselements mit diesem beispielsweise durch eine Clipsverbindung oder durch zumindest in Umfangsrichtung in Eingriff stehende Stifte, Ausnehmungen und dergleichen wirkverbunden sein. Auch eine Wirkverbindung zwischen Radnabenabdeckung bzw. Radnabendeckel und Betätigungselement über einen koaxial zur Achse der Radwelle angeordneten Profilstab ist denkbar. Die Radnabenabdeckung bzw. der Radnabendeckel dient gleichzeitig dem Schutz sämtlicher in der Radnabe angeordneter Bestandteile der Feststellbremse. Dadurch ist ein zuverlässiger Schutz der Feststellbremse vor Verschmutzung sichergestellt. Bevorzugt stimmt die Anzahl der ersten bzw. der zweiten Richtungen, in denen das Betätigungselement die ersten bzw. die zweiten Ausdehnungen aufweist, mit der Anzahl der in der Radnabe untergebrachten Arretierschieber überein.

Der mindestens eine Arretierschieber weist in einer Richtung senkrecht zur Achse der fest stehenden Radwelle betrachtet bevorzugt eine Abmessung auf, die kleiner ist, als der Innenradius des Profilkranzes abzüglich der kleineren der beiden Ausdehnungen des Betätigungselements in der ersten bzw. zweiten Richtung von der Achse aus gesehen. Dadurch kann das Betätigungselement direkt auf der Achse der Radwelle angeordnet werden und der mindestens eine Arretierschieber in radialer Richtung von der Achse weg zwischen Betätigungselement und Profilkranz.

Vorzugsweise sind zwei, drei, vier oder fünf Arretierschieber vorgesehen, die bevorzugt gleichmäßig um die Achse der Radwelle verteilt angeordnet sind. Sind mehrere Arretierschieber vorgesehen kann das Betätigungselement eine der Anzahl der Arretierschieber entsprechende Geometrie aufweisen. Sind die Arretierschieber beispielsweise gleichmäßig um die Achse verteilt angeordnet, kann die Geometrie des Betätigungselements ebenfalls symmetrisch ausgeführt sein. Entsprechend kann das Betätigungselement eine symmetrische Rechteck-, Dreieck-, Viereck- oder Fünfeckgeometrie aufweisen. Symmetrische Geometrien sind wesentlich einfacher und damit kostengünstiger herstellbar, als asymmetrische Geometrien.

Das Betätigungselement kann als eine Scheibe ausgeführt sein, deren Ebene normal zur Achse verläuft.

Der Übergang zwischen den unterschiedlichen Ausdehnungen des Betätigungselements in erster und zweiter Richtung ist vorzugsweise stetig. Beispielsweise folgt der Übergang einer stetigen Funktion. Ebenfalls ist denkbar, dass der Übergang durch einen oder mehrere Radien abgerundet hergestellt ist.

Die Feststellbremse kann über einen oder mehrere Anschläge verfügen, zwischen denen das Betätigungselement verdrehbar ist. Das Betätigungselement kann zwischen zwei Anschlägen verdrehbar sein. Vorzugsweise befindet sich dabei ein erster Anschlag in einer Position, in welcher sich das gegen den ersten Anschlag verdrehte Betätigungselement in einer ersten Stellung befindet, in der die wenigstens eine Richtung mit der kleineren der beiden Abmessungen des Betätigungselements mit der Verschieberichtung des mindestens einen Arretierschiebers übereinstimmt. Der zweite Anschlag befindet sich in einer Position, in welcher sich das gegen den zweiten Anschlag verdrehte Betätigungselement in einer zweiten Stellung befindet, die von der ersten Stellung aus gesehen etwas weiter weg verdreht liegt, als eine dritte Stellung, in der die wenigstens eine Richtung mit der größeren der beiden Abmessungen des Betätigungselements mit der Verschieberichtung des mindestens einen Arretierschiebers übereinstimmt. Ist nun der mindestens eine Arretierschieber in einer Richtung zur Achse hin federbelastet ausgeführt, so stellt die gegen die Position des zweiten Anschlags liegende zweite Stellung des Betätigungselements eine stabile Lage dar, aus der das Betätigungselement nur durch Verdrehen unter Kraftaufwand gegen die Federbelastung gelöst werden kann. In der ersten Stellung liegt ohnehin eine stabile Lage vor, weshalb der erste Anschlag nur vorgesehen ist, um aus der ersten Stellung heraus eine bestimmte Drehrichtung zur Betätigung der Feststellbremse vorzugeben bzw. sicherzustellen. Gegebenenfalls kann auf den ersten Anschlag auch verzichtet werden.

Das Betätigungselement kann mit einem gegenüber der Radnabe verdrehbar beispielsweise an oder in der Radnabe gelagerten Radnabendeckel in Eingriff stehen, welcher den Innenraum vollständig abdeckt und an seiner Außenfläche vorzugsweise mit einem oder mehreren beispielsweise ergonomisch geformten Vorsprüngen und/oder mit einer oder mehreren beispielsweise ergonomisch geformten Vertiefungen versehen sein kann, um den Radnabendeckel beispielsweise per Hand oder mit dem Fuß zum Zwecke einer Betätigung der Feststellbremse gegenüber dem Rad zu verdrehen. Dadurch wird eine einfache Betätigung der Feststellbremse bei gleichzeitig bestmöglichem Schutz vor Verschmutzung sichergestellt.

Weitere Vorteile, Besonderheiten und zweckmäßige Weiterbildungen der Erfindung ergeben sich aus den weiteren Unteransprüchen oder deren Unterkombinationen.

Ausführungsbeispiele der Erfindung sind in den Zeichnungen dargestellt Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Im Einzelnen zeigt die schematische Darstellung in:
- Fig. 1: eine Explosionszeichnung einer Feststellbremse in perspektivische Ansicht, wobei Fig. 1 a) eine Vorderansicht aus Richtung der Radnabenabdeckung bzw. des Radnabendeckels und Fig. 1 b) eine Rückansicht aus Richtung der fest stehenden Radwelle zeigt,
- Fig. 2: die Funktionsweise einer Feststellbremse bei abgenommener Radnabenabdeckung bzw. abgenommenen Radnabendeckel in einer Draufsicht in Richtung der Achse der Radwelle betrachtet, wobei Fig. 2 a) die Feststellbremse in Fahrposition, Fig. 2 b) eine Zwischenstellung während der Betätigung der Feststellbremse, und Fig. 2 c) die Feststellbremse in Feststellposition zeigt, sowie
- Fig. 3: eine Feststellbremse in teilweise geschnittener perspektivischer Rückansicht, wobei Fig. 3 a) einen am Arretierschieberchassis angeordneten Anschlag zeigt, und Fig. 3 b) einen mit diesem Anschlag korrespondierenden, am Radnabendeckel angeordneten Anschlag.

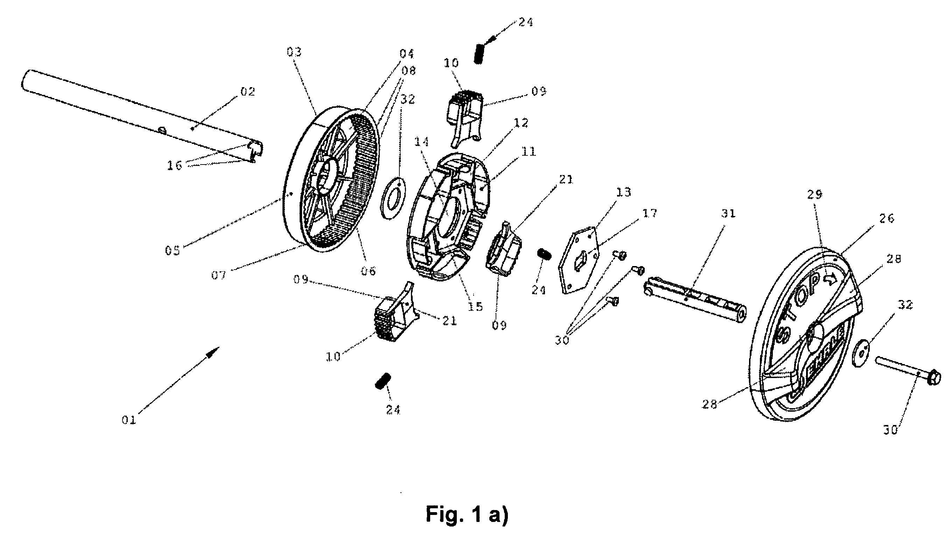

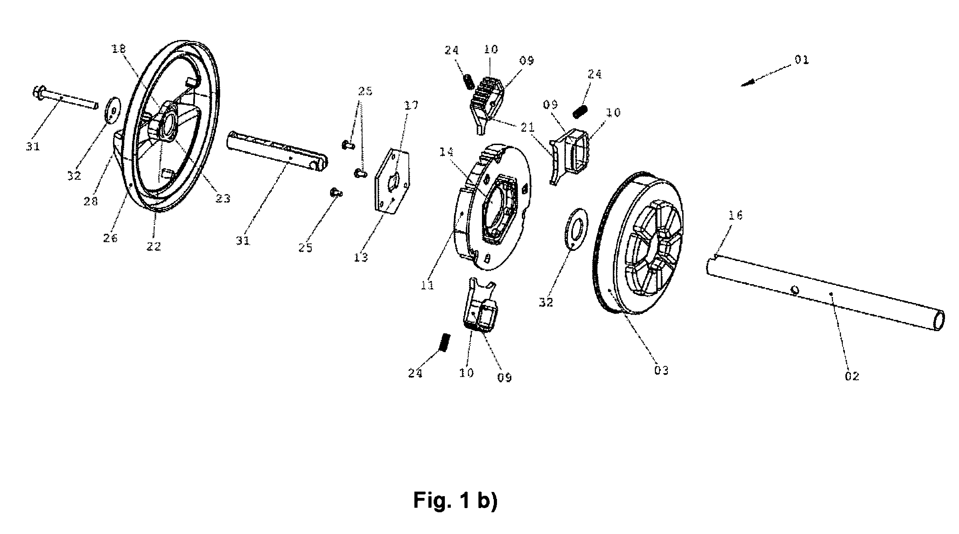

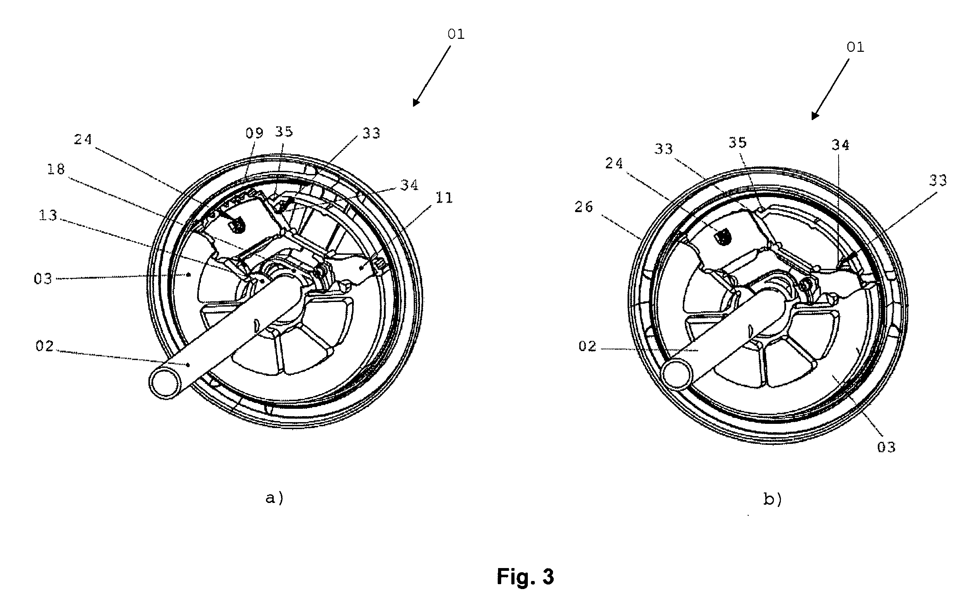

Eine in den Fig. 1 bis 3 ganz oder in Teilen dargestellte Feststellbremse 01 für ein an einer fest stehenden Radwelle 02 drehbar gelagertes Rad weist eine um die entlang der Längsachse der Radwelle 02 verlaufende Achse drehbar gelagerte Radnabe 03 auf, welche als Felge für eine nicht dargestellte Bereifung ausgeführt sein kann. Die Radnabe 03 kann ein- oder mehrteilig ausgeführt sein und besteht aus einer mit einem Boden 04 versehenen Trommel 05.

Die Feststellbremse 01 verfügt außerdem über einen an der Innenwand 06 der Trommel 05 der Radnabe 03 vorgesehenen Profilkranz 07. Der Profilkranz 07 weist gleichartige Kranzprofile 08 auf. Die Kranzprofile 08 sind gleichmäßig an der Innenwand 06 über den gesamten Innenumfang der Radnabe 03 verteilt. Die Kranzprofile 08 erstrecken sich frei in den von der Trommel 05 umgebenen Innenraum der Radnabe 03. Bevorzugt bilden die Kranzprofile 08 Zähne und Zahnzwischenräume einer Innenverzahnung. Die Trommel 05 ist in diesem Fall als eine beispielsweise topfförmige Zahnkranztrommel ausgeführt.

Die Feststellbremse 01 weist darüber hinaus beispielsweise drei vorzugsweise gleichmäßig um die Achse der Radwelle 02 verteilt angeordnete, an der fest stehenden Radwelle 02 in einer Richtung senkrecht zur Achse der Radwelle 02 verschiebbar gelagerte und von außen betätigbare Arretierschieber 09 auf. Die Arretierschieber 09 sind jeweils dem Profilkranz 07 zugeordnet. Die Arretierschieber 09 verfügen hierzu über jeweils mindestens ein über wenigstens ein Kranzprofil 08 des Profilkranzes 07 greifendes oder mindestens in wenigstens einen Raum zwischen zwei Kranzprofilen 08 eingreifendes Schieberprofil 10.

Die Arretierschieber 09 sind jeweils in einer Stellung, in der deren Schieberprofil 10 in das Kranzprofil 08 eingreift arretierbar. Die Arretierschieber 09 sind hierzu zumindest so weit in Richtung senkrecht zur Achse der Radwelle 02 verschiebbar, dass sich in einer ersten Endstellung des Verschiebewegs eine Eingriffstellung der Arretierschieber 09 der Feststellbremse 01 ergibt, in welcher Eingriffstellung die Schieberprofile 10 der Arretierschieber 09 in das Kranzprofil 08 des Profilkranzes 07 eingreifen. In einer zweiten Endstellung des Verschiebewegs ergibt sich eine Freistellung der Arretierschieber 09 der Feststellbremse 01, welche Freistellung frei von einem Eingriff der Schieberprofile 10 in das Kranzprofil 08 des Profilkranzes 07 ist, bzw. in welcher Freistellung der Eingriff aufgehoben ist. Die Eingriffstellung der Arretierschieber 09 kennzeichnet dabei eine Feststellposition der Feststellbremse 01, wohingegen die Freistellung eine Fahrposition der Feststellbremse 01 kennzeichnet.

Um die drehbar um die Achse der fest stehenden Radwelle 02 gelagerte Radnabe 03 in Feststellposition der Feststellbremse 01 festlegen und in Fahrposition der Feststellbremse 01 freigeben zu können, müssen die Arretierschieber 09 in radialer Richtung z.B. verschiebbar angeordnet und gleichzeitig unverdrehbar mit der fest stehenden Radwelle 02 verbunden sein.

Zur gegenüber der Achse der Radwelle 03 unverdrehbaren und gleichzeitig in radialer Richtung zu der Achse verschiebbaren Anordnung der Arretierschieber 03 kann ein Arretierschieberchassis 11 vorgesehen sein, welches in radialer Richtung zu der Achse der Radwelle 02 verlaufende Führungsbahnen 12 für die Arretierschieber 09 aufweist. Das Arretierschieberchassis 11 ist unverdrehbar mit der Radwelle 02 verbunden. Zur unverdrehbaren Verbindung von Arretierschieberchassis 11 und fest stehender Radwelle 02 kann ein Formschlusselement 13 vorgesehen sein. Das Formschlusselement 13 bildet vorzugsweise sowohl mit der Radwelle 02, als auch mit dem Arretierschieberchassis 11 einen Formschluss.

Das Arretierschieberchassis 11 kann zur Herstellung eines Formschlusses mit dem Formschlusselement 13 über eine konzentrisch zur Achse der Radwelle 03 angeordnete zentrale Öffnung 14 herum angeordnete zentrale Aufnahme 15 mit von der Kreisform abweichender Außenkontur verfügen. Die Außenkontur der zentralen Aufnahme 15 kann beispielsweise mehreckig, etwa sechseckig, sternförmig, oder andersartig geeignet gestaltet sein. Das Formschlusselement 13 hat vorzugsweise eine mit der Außenkontur der zentralen Aufnahme 15 korrespondierende Form. Beispielsweise ist das Formschlusselement 13 als Sechskantscheibe ausgeführt, zur Herstellung des Formschlusses mit einer sechseckigen Außenkontur der zentralen Aufnahme 15 des Arretierschieberchassis 11.

Zur Herstellung eines Formschlusses mit dem Formschlusselement 13 kann die Radwelle 02 an ihrem dem der Radnabe 03 zugewandten Ende mit Schlitzen 16 versehen sein. Das Formschlusselement 13 seinerseits kann mit einer zentralen Ausnehmung 17 versehen sein, deren Kontur in die Schlitze 16 eingreift.

Das Formschlusselement 13 kann mittels Schrauben 25 am Arretierschieberchassis 11 gesichert sein.

Zur Betätigung der Arretierschieber 09 verfügt die Feststellbremse 01 über ein mit den Arretierschiebern 09 zusammenwirkendes, um die Achse der fest stehenden Radwelle 02 drehbar gelagertes Betätigungselement 18. Das Betätigungselement 18 weist in wenigstens einer ersten Richtung senkrecht zu der Achse der Radwelle 02 von dieser aus gesehen eine erste Ausdehnung 19 auf, und in wenigstens einer zweiten Richtung senkrecht zu der Achse der Radwelle 02, welche verschieden von der ersten Richtung ist, von der Achse aus gesehen eine zweite Ausdehnung 20 auf, die von der ersten Ausdehnung 19 verschieden, beispielsweise größer ist.

Die Anzahl der ersten bzw. der zweiten Richtungen, in denen das Betätigungselement 18 die ersten bzw. die zweiten Ausdehnungen 19 bzw. 20 aufweist, stimmt bevorzugt mit der Anzahl der in der Radnabe 03 untergebrachten Arretierschieber 09 überein.

Im einfachsten Fall einer Feststellbremse 01, bei dem nur ein Arretierschieber 09 vorgesehen ist, kann das Betätigungselement 18 beispielsweise ein aus Richtung der Achse der Radwelle 02 betrachtet eiförmiger Excenter sein.

Das Betätigungselement 18 ist vorzugsweise ebenfalls in der zentralen Aufnahme 15 untergebracht. Bevorzugt ragen die Arretierschieber 09 mit ihren dem jeweiligen Schieberprofil 10 abgewandten Enden 21 ebenfalls in die zentrale Aufnahme 15.

Hierbei weisen die Arretierschieber 09 in einer Richtung senkrecht zur Achse der fest stehenden Radwelle 02 betrachtet bevorzugt eine Abmessung auf, die kleiner ist, als der Innenradius des Profilkranzes 07 abzüglich der kleineren der beiden Ausdehnungen 19 bzw. 20 des Betätigungselements 18 in der ersten bzw. zweiten Richtung von der Achse aus gesehen. Dadurch kann das Betätigungselement 18 direkt auf der Achse der Radwelle 02 in der zentralen Aufnahme 15 angeordnet werden und die Arretierschieber 09 in radialer Richtung von der Achse weg zwischen Betätigungselement 18 und Profilkranz 07.

Das Betätigungselement 18 weist vorzugsweise eine der Anzahl der Arretierschieber 09 entsprechende Geometrie auf. Sind wie in den Fig. 1 bis 3 dargestellt drei Arretierschieber 09 vorgesehen, so ist die Geometrie des Betätigungselements 18 ebenfalls auf einer dreieckigen Grundform gebildet. Sind darüber hinaus wie in den Fig. 1 bis 3 dargestellt die mehreren Arretierschieber 03 gleichmäßig um die Achse verteilt angeordnet, so ist die Geometrie des Betätigungselements 18 symmetrisch ausgeführt. Entsprechend den in den Fig. 1 bis 3 dargestellten Ausführungsbeispielen der Feststellbremse 01 weist das Betätigungselement bevorzugt eine symmetrische Dreieckgeometrie auf.

Das Betätigungselement 18 kann demnach als eine Scheibe ausgeführt sein, deren Ebene normal zur Achse der Radwelle 02 verläuft, und welche entlang der Achse betrachtet eine symmetrische Dreieckgeometrie aufweist.

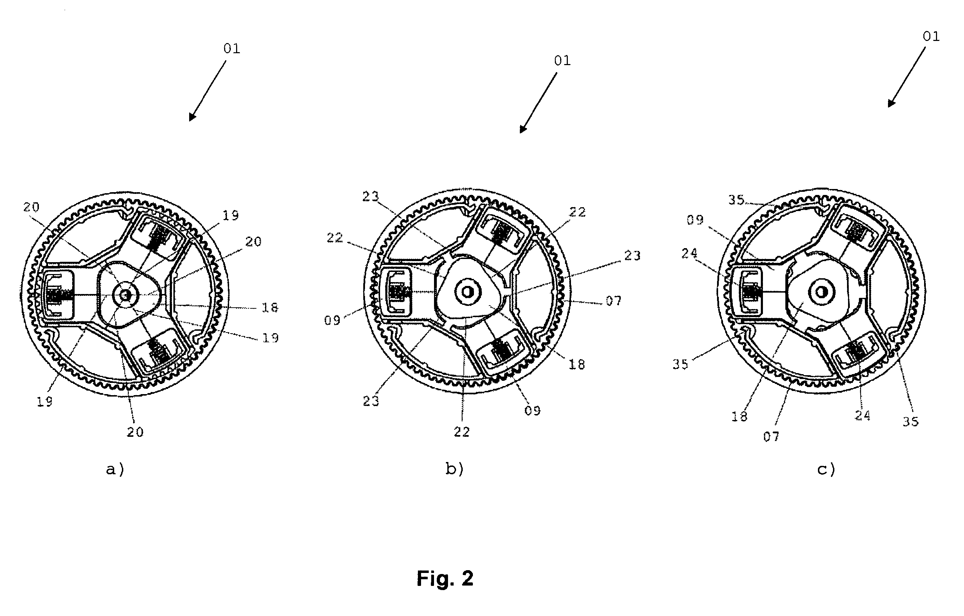

Der Übergang zwischen den unterschiedlichen Ausdehnungen des Betätigungselements in erster und zweiter Richtung kann einer stetigen Funktion folgen. Dies kann beispielsweise verwirklicht sein, indem zwischen den Außenkanten 22 der Grundform des Betätigungselements 18 ein abgerundeter Übergang durch einen oder mehrere Radien 23 hergestellt ist (Fig. 2).

Die Arretierschieber 09 sind vorzugsweise in Richtung radial zur Achse der Radwelle 02 mittels Druckfedern 24 federbelastet. Auch eine Verwirklichung der Federbelastung mittels Zugfedern ist denkbar. Die Federbelastung wirkt bevorzugt in einer die einzelnen Arretierschieber 09 von der Eingriff- in die Freistellung verschiebenden Richtung radial zur Achse der Radwelle 02 hin. Grundsätzlich ist auch eine Umkehrung der Federbelastung radial nach außen denkbar, verbunden mit einer veränderten Geometrie von Arretierschiebern 09 und Betätigungselement 18.

Bei einem Wechsel der Ausrichtung des Betätigungselements 18 gegenüber den Arretierschiebern 09 von der ersten in die zweite Richtung erfolgt ein Betätigen der Feststellbremse 01. Der Unterschied zwischen den beiden Ausdehnungen 19 bzw. 20 des Betätigungselements 18 in der ersten bzw. in der zweiten Richtung entspricht dabei wenigstens dem Verschiebeweg der einzelnen Arretierschieber 09 von der Freistellung (Fig. 2 a)) in die Eingriffstellung (Fig. 2 c)). Fig. 2 b) zeigt eine Zwischenstellung bei Betätigung der Feststellbremse von der Freistellung in die Eingriffstellung bzw. umgekehrt.

Die Feststellbremse 01 kann in der Radnabe 03 verkapselt sein. Beispielsweise kann ein Radnabendeckel 26 als Radnabenabdeckung vorgesehen sein. Der Radnabendeckel 26 ist gegenüber der Radnabe 03 verdrehbar angeordnet. Der Radnabendeckel 26 kann zum Betätigen der Feststellbremse 01 durch Verdrehen des Betätigungselements 18 mit diesem wirkverbunden sein. Es ist auch denkbar, dass Radnabendeckel 26 und Betätigungselement 18 beispielsweise durch Spritzgießen einstückig ausgeführt sind. Auch eine Wirkverbindung zwischen Radnabendeckel 26 und Betätigungselement 18 über einen koaxial zur Achse der Radwelle 02 angeordneten Profilstab ist denkbar.

Der Radnabendeckel 26 deckt zumindest den von der Trommel 5 umgebenen Innenraum vorzugsweise vollständig ab. An seiner der Radnabe 03 abgewandten Außenfläche 27 kann der Radnabendeckel 26 mit einem oder mehreren beispielsweise ergonomisch geformten Vorsprüngen 28 versehen sein. Diese dienen einer Betätigung der Feststellbremse 01 per Hand oder mit dem Fuß.

Ein oder mehrere Symbole 29 und/oder eine Beschriftung kann die Drehrichtung angeben, in welcher der Radnabendeckel 26 gedreht werden muss, um die Feststellbremse 01 zu lösen bzw. zu arretieren.

Der Radnabendeckel 26 gemeinsam mit dem Betätigungselement 18 können mittels einer Schraube 30, welche in einen in der beispielsweise als Hohlwelle ausgeführen Radwelle 02 eingesetzten Schraubdübel 31 eingeschraubt werden kann, gegenüber der Radwelle 02 und dem in der Radnabe 03 untergebrachten Arretierschieberchassis 11 fixiert.

Unterlegscheiben 32 dienen als Abstandshalter zwischen relativ zueinander verdrehbaren Teilen der Feststellbremse 01 und wirken einem Verschleiß entgegen. Anstelle der als Schrauben 25, 30 ausgeführten Verbindungsmittel sind ebenso Klips- und/oder Steckverbindungen denkbar.

Die Feststellbremse 01 kann über einen oder mehrere Anschläge 33 verfügen, zwischen denen das Betätigungselement 18 verdreht werden kann. Die Anschläge 33 können beispielsweise durch am Radnabendeckel 26 angeordnete Vorsprünge 35 und am Arretierschieberchassis 11 angeordnete, korrespondierende und vorzugsweise federbelastete Nasen 34 gebildet sein.

Die Anschläge 33 können so angeordnet sein, dass sich ein erster Anschlag 33 in einer Position befindet, in welcher sich das Betätigungselement 18 bei gegen den ersten Anschlag 33 verdrehtem Radnabendeckel 26 in einer ersten Stellung befindet, in der die Richtungen mit den jeweils kleineren der beiden Abmessungen 19 bzw. 20 des Betätigungselements 18 mit den Verschieberichtungen der Arretierschieber 09 übereinstimmen. Der zweite Anschlag 33 befindet sich in einer Position, in welcher sich das Betätigungselement 18 bei gegen den zweiten Anschlag 33 verdrehtem Radnabendeckel 26 in einer zweiten Stellung befindet, die von der ersten Stellung aus gesehen etwas weiter weg verdreht liegt, als eine dritte Stellung, in der die Richtungen mit den jeweils größeren der beiden Abmessungen 20 bzw. 19 des Betätigungselements 18 mit den Verschieberichtungen der Arretierschieber 09 übereinstimmen. Durch die Federbelastung der Arretierschieber 09 in radialer Richtung zur Achse der Radwelle 02 hin ergibt sich so eine stabile Lage des gegen den zweiten Anschlag liegenden Betätigungselements 18, aus der das Betätigungselement 18 nur durch Verdrehen unter Kraftaufwand gegen die Federbelastung gelöst werden kann.

Die Feststellbremse 01 kann bevorzugt in einer Radnabe 03 wenigstens eines Rads eines mobilen Arbeitsgeräts angeordnet sein, wie etwa einem mobilen Kalt- und/oder Heißwasser Hochdruckreinigungsgerät, einem mobilen Nass- und Trockensauger, einer Kehrmaschine, denen gemein ist, dass sie über wenigstens ein auf einer fest stehenden Radwelle 02 angeordnetes Rad verfügen.

Die Erfindung ist insbesondere im Bereich der Herstellung mobiler Arbeitsmaschinen sowie im Bereich der Herstellung von Feststellbremsen für solche Arbeitsmaschinen gewerblich anwendbar.

**Bezugszeichenliste**

| | | | |
|---|---|---|---|
| 01 | Feststellbremse | 19 | erste Ausdehnung |
| 02 | Radwelle | 20 | zweite Ausdehnung |
| 03 | Radnabe | 21 | Ende |
| 04 | Boden | 22 | Außenkante |
| 05 | Trommel | 23 | Radius |
| 06 | Innenwand | 24 | Druckfeder |
| 07 | Profilkranz | 25 | Schraube |
| 08 | Kranzprofil | 26 | Radnabendeckel |
| 09 | Arretierschieber | 27 | Außenfläche |
| 10 | Schieberprofil | 28 | Vorsprung |
| 11 | Arretierschieberchassis | 29 | Symbol |
| 12 | Führungsbahn | 30 | Schraube |
| 13 | Formschlusselement | 31 | Schraubdübel |
| 14 | zentrale Öffnung | 32 | Unterlegscheibe |
| 15 | zentrale Aufnahme | 33 | Anschlag |
| 16 | Schlitz | 34 | Vorsprung |
| 17 | zentrale Ausnehmung | 35 | Nase |
| 18 | Betätigungselement | | |

## Patentansprüche

1. Feststellbremse (01) mit einem an einer Innenwand (06) einer Radnabe (03) wenigstens eines an einer fest stehenden Radwelle (02) drehbar gelagerten Rads vorgesehenen Profilkranz (07), welcher gleichartige Kranzprofile (08) aufweist, die gleichmäßig über den gesamten Innenumfang der Radnabe (03) verteilt sind und sich frei in den Innenraum der Radnabe (03) erstrecken, und mit mindestens einem an der Radwelle (02) in einer Richtung senkrecht zu deren Achse verschiebbar gelagerten und von außen betätigbaren Arretierschieber (09), der dem Profilkranz (07) zugeordnet ist, wobei der Arretierschieber (09) mindestens ein über wenigstens ein Kranzprofil (08) des Profilkranzes (07) greifendes oder mindestens in einen Raum zwischen wenigstens zwei Kranzprofilen (08) eingreifendes Schieberprofil (10) aufweist und in dieser Stellung arretierbar ist,
**gekennzeichnet durch**
ein mit dem mindestens einen Arretierschieber (09) zusammenwirkendes, um die Achse der Radwelle (02) drehbar gelagertes Betätigungselement (18), welches in wenigstens einer ersten Richtung senkrecht zu der Achse von dieser aus gesehen eine erste Ausdehnung (19) aufweist, und in wenigstens einer zweiten Richtung senkrecht zu der Achse von dieser aus gesehen eine von der ersten Ausdehnung (19) verschiedene zweite Ausdehnung (20) aufweist, wobei bei einem Wechsel der Ausrichtung des Betätigungselements (18) gegenüber dem mindestens einen Arretierschieber (09) von der ersten in die zweite Richtung ein Betätigen bzw. Lösen der Feststellbremse (01) erfolgt, wobei der mindestens eine Arretierschieber (09) in Richtung radial zur Achse der Radwelle (02) federbelastet ist.

2. Feststellbremse nach Anspruch 1,
**dadurch gekennzeichnet,**
**dass** die Anzahl der ersten bzw. der zweiten Richtungen, in denen das Betätigungselement (18) die ersten bzw. die zweiten Ausdehnungen (19 bzw. 20) aufweist, mit der Anzahl der in der Radnabe (03) untergebrachten Arretierschieber (09) übereinstimmt.

3. Feststellbremse nach Anspruch 1 oder 2,
**dadurch gekennzeichnet,**
**dass** der mindestens eine Arretierschieber (09) in einer Richtung senkrecht zur Achse der fest stehenden Radwelle (02) betrachtet eine Abmessung aufweist, die kleiner ist, als der Innenradius des Profilkranzes (07) abzüglich der von der Achse aus gesehen kleineren der beiden Ausdehnungen (19 , 20) des Betätigungselements (18) in der ersten bzw. zweiten Richtung.

4. Feststellbremse nach Anspruch 1, 2 oder 3,
**dadurch gekennzeichnet,**
**dass** zwei, drei, vier oder fünf gleichmäßig um die Achse der Radwelle (02) verteilt angeordnete Arretierschieber (09) vorgesehen sind und das Betätigungselement (18) eine der Anzahl der Arretierschieber (09) entsprechende symmetrische Geometrie aufweist.

5. Feststellbremse nach einem der vorhergehenden Ansprüche,
**dadurch gekennzeichnet,**
**dass** das Betätigungselement (18) als eine Scheibe ausgeführt ist, deren Ebene normal zur Achse verläuft.

6. Feststellbremse nach einem der vorhergehenden Ansprüche,
**dadurch gekennzeichnet,**
**dass** der Übergang zwischen den unterschiedlichen Ausdehnungen (19, 20) des Betätigungselements (18) in erster und zweiter Richtung stetig verläuft.

7. Feststellbremse nach Anspruch 6,
**dadurch gekennzeichnet,**
**dass** der Übergang durch mindestens einen Radius (23) abgerundet ist.

8. Feststellbremse nach einem der vorhergehenden Ansprüche,
**gekennzeichnet durch**
wenigstens zwei Anschläge (33, 34, 35), zwischen denen das Betätigungselement (18) verdrehbar ist, wobei ein erster Anschlag (33, 34, 35) in einer Position angeordnet ist, in welcher sich das gegen den ersten Anschlag (33, 34, 35) verdrehte Betätigungselement (18) in einer ersten Stellung befindet, in der die wenigstens eine Richtung mit der kleineren der beiden Abmessungen (19, 20) des Betätigungselements (18) mit der Verschieberichtung des mindestens einen Arretierschiebers (09) übereinstimmt, und wobei ein zweiter Anschlag (33, 34, 35) in einer Position angeordnet ist, in welcher sich das gegen den zweiten Anschlag (33, 34, 35) verdrehte Betätigungselement (18) in einer zweiten Stellung befindet, die von der ersten Stellung aus gesehen etwas weiter weg verdreht liegt, als eine dritte Stellung, in der die wenigstens eine Richtung mit der größeren der beiden Abmessungen (20, 19) des Betätigungselements (18) mit der Verschieberichtung des mindestens einen Arretierschiebers (09) übereinstimmt.

9. Feststellbremse nach einem der vorhergehenden Ansprüche,
**gekennzeichnet durch**
eine mit dem Betätigungselement (18) verbundene und gegenüber der Radnabe (03) verdrehbar angeordnete Radnabenabdeckung (26).

## Claims

1. An immobilisation brake (01) with a profile collar (07), provided on an inner wall (06) of a wheel hub (03) of at least one wheel which is rotatably mounted on a stationary wheel shaft (02), which profile collar has uniform collar profiles (08) which are distributed uniformly over the entire inner circumference of the wheel hub (03) and extend freely into the interior of the wheel hub (03), and with at least one locking slider (09) mounted displaceably on the wheel shaft (02) in a direction perpendicularly to its axis and able to be actuated from the exterior, which locking slider (09) is associated with the profile collar (07), wherein the locking slider (09) has at least one slider profile (10) engaging over at least one collar profile (08) of the profile collar (07) or at least engaging into a space between at least two collar profiles (08) and is able to be locked in this position,
**characterized by**
an actuating element (18), cooperating with the at least one locking slider (09) and rotatably mounted about the axis of the wheel shaft (02), which actuating element has a first extent (19), in at least a first direction perpendicularly to the axis viewed therefrom, and in at least a second direction perpendicularly to the axis viewed therefrom has a second extent (20) different from the first extent (19), wherein in the case of a change of the orientation of the actuating element (18) with respect to the at least one locking slider (09) from the first into the second direction an actuating or respectively releasing of the immobilisation brake (01) takes place, wherein the at least one locking slider (09) is spring-loaded in a direction radially to the axis of the wheel shaft (02).

2. The immobilisation brake according to claim 1,
**characterized in that**
the number of first or respectively second directions in which the actuating element (18) has the first or respectively the second extents (19 or respectively 29), coincides with the number of locking sliders (09) housed in the wheel hub (03).

3. The immobilisation brake according to claim 1 or 2,
**characterized in that**
the at least one locking slider (09), viewed in a direction perpendicularly to the axis of the stationary wheel shaft (02), has a dimension which is smaller than the inner radius of the profile collar (07) less the smaller of the two extents (19, 20) of the actuating element (18), viewed from the axis, in the first or respectively second direction.

4. The immobilisation brake according to claim 1, 2 or 3,
**characterized in that**
two, three, four or five locking sliders (09) arranged uniformly distributed about the axis of the wheel shaft (02), are provided and the actuating element (18) has a symmetrical geometry corresponding to the number of the locking sliders (09).

5. The immobilisation brake according to one of the preceding claims,
**characterized in that**
the actuating element (18) is embodied as a disc, the plane of which runs normal to the axis.

6. The immobilisation brake according to one of the preceding claims,
**characterized in that**
the transition between the different extents (19, 20) of the actuating element (18) in the first and second direction runs continuously.

7. The immobilisation brake according to claim 6,
**characterized in that**
the transition is rounded through at least one radius (23).

8. The immobilisation brake according to one of the preceding claims,
**characterized by**
at least two stops (33, 34, 35), between which the actuating element (18) is rotatable, wherein a first stop (33, 34, 35) is arranged in a position in which the actuating element (18), rotated against the first stop (33, 34, 35), is situated in a first position, in which the at least one direction coincides with the smaller of the two dimensions (19, 20) of the actuating element (18) with the displacement direction of the at least one locking slider (09), and wherein a second stop (33, 34, 35) is arranged in a position in which the actuating element (18), rotated against the second stop (33, 34, 35), is situated in a second position, which lies rotated slightly further away, viewed from the first position, than a third position, in which the at least one direction with the greater of the two dimensions (20, 19) of the actuating element (18) coincides with the displacement direction of the at least one locking slider (09).

9. The immobilisation brake according to one of the preceding claims,
**characterized by**
a wheel hub cover (26) connected with the actuating element (18) and arranged rotatably with respect to the wheel hub (03).

## Revendications

1. Frein de stationnement (01) avec une couronne profilée (07) prévue sur une paroi intérieure (06) d'un moyeu de roue (03) d'au moins une roue logée pouvant tourner sur un arbre de roue (02) fixe, laquelle comporte des profils de couronne (08) similaires qui sont répartis de façon uniforme sur toute la périphérie intérieure du moyeu de roue (03) et s'étendent librement dans l'espace intérieur du moyeu de roue (03) et avec au moins un coulisseau d'arrêt (09) logé pouvant être déplacé sur l'arbre de roue (02) dans une direction perpendiculairement à son axe et pouvant être actionné de l'extérieur, qui est affecté à la couronne profilée (07), pour lequel le coulisseau d'arrêt (09) comporte au moins un profil de coulisseau (10) venant en prise avec au moins un profil de couronne (08) de la couronne profilée (07) ou au moins s'engrènant dans un espace entre au moins deux profils de couronne (08) et peut être verrouillé dans cette position,
**caractérisé par**
un élément de commande (18) logé pouvant tourner autour de l'axe de l'arbre de roue (02), coopérant avec au moins un coulisseau d'arrêt (09), lequel élément de commande comporte dans au moins une première direction vue perpendiculairement à l'axe de celle-ci, une première extension (19) et comporte dans au moins une deuxième direction vue perpendiculairement à l'axe de celle-ci, une deuxième extension (20) différente de la première extension (19), pour lequel un actionnement ou un desserrage du frein de stationnement (01) a lieu lors d'un changement de l'orientation de l'élément de commande (18) par rapport à au moins un coulisseau d'arrêt (09) de la première dans la deuxième direction, pour lequel au moins un coulisseau d'arrêt (09) est commandé par ressort en direction radiale par rapport à l'axe de l'arbre de roue (02).

2. Frein de stationnement selon la revendication 1,
**caractérisé en ce que**
le nombre des premières ou deuxièmes directions, dans lesquelles l'élément de commande (18) comporte les premières ou deuxièmes extensions (19 ou 20), coïncide avec le nombre des coulisseaux d'arrêt (09) placés dans le moyeu de roue (03).

3. Frein de stationnement selon la revendication 1 ou 2,
**caractérisé en ce qu'**
au moins un coulisseau d'arrêt (09) comporte dans une direction considérée perpendiculairement à l'axe de l'arbre de roue (02) fixe une dimension qui est plus petite que le rayon intérieur de la couronne profilée (07), déduction faite de la plus petite des deux extensions (19, 20) de l'élément de commande (18), vue de l'axe, dans la première ou deuxième direction.

4. Frein de stationnement selon la revendication 1, 2 ou 3,
**caractérisé en ce que**
deux, trois, quatre ou cinq coulisseaux d'arrêt (09) sont prévus uniformément répartis autour de l'axe de l'arbre de roue (02) et l'élément de commande (18) présente une géométrie symétrique correspondant au nombre des coulisseaux d'arrêt (09).

5. Frein de stationnement selon l'une quelconque des revendications précédentes,
**caractérisé en ce que**
l'élément de commande (18) est exécuté comme un disque, dont le plan passe normalement par rapport à l'axe.

6. Frein de stationnement selon l'une quelconque des revendications précédentes,
**caractérisé en ce que**
le passage entre les différentes extensions (19, 20) de l'élément de commande (18) passe de façon constante dans la première et la deuxième direction.

7. Frein de stationnement selon la revendication 6,
**caractérisé en ce que**
le passage par au moins un rayon (23) est arrondi.

8. Frein de stationnement selon l'une quelconque des revendications précédentes,
**caractérisé par**
au moins deux butées (33, 34, 35) entre lesquelles l'élément de commande (18) peut être tourné, pour lequel une première butée (33, 34, 35) est disposée dans une position, dans laquelle se trouve dans une première position l'élément de commande (18) tourné contre la première butée (33, 34, 35), dans laquelle au moins une direction coïncide avec la plus petite des deux dimensions (19, 20) de l'élément de commande (18) avec la direction de déplacement d'au moins un coulisseau d'arrêt (09) et pour lequel une deuxième butée (33, 34, 35) est disposée dans une position, dans laquelle se trouve dans une deuxième position l'élément de commande (18) tourné contre la deuxième butée (33, 34, 35), qui vue de la première position est située tournée un peu plus éloignée qu'une troisième position, dans laquelle au moins une direction avec la plus grande des deux dimensions (20, 19) de l'élément de commande (18) coïncide avec la direction de déplacement d'au moins un coulisseau d'arrêt (09).

9. Frein de stationnement selon l'une quelconque des revendications précédentes,
**caractérisé par**
un cache-moyeu (26) relié à l'élément de commande (18) et disposé pouvant tourner par rapport au moyeu de roue (03).
